# EUROPEAN PATENT SPECIFICATION

(11) **EP 2 770 755 B1**
(45) Date of publication and mention of the grant of the patent: **05.04.2017**
(21) Application number: 13156241.5
(22) Date of filing: 21.02.2013
(51) Int. Cl.: H04W 4/00

(54) **Near field communication tag type identification**
Identifizierung des Typs von NFC Tags
Identification du type des tags NFC

(43) Date of publication of application: 27.08.2014
(73) Proprietor: OCT Circuit Technologies International Limited, Dublin 18 (IE)
(72) Inventor: Hussain, Jafer, 669597 Singapore (SG)
(74) Representative: Grünecker Patent- und Rechtsanwälte PartG mbB

(56) References cited:
- Jafer Hussain: "Correction to NFC-A Collision Resolution Activity", , 4 September 2012 (2012-09-04), XP055083274, Retrieved from the Internet: URL:http://www.nfc-forum.org/apps/group_pu blic/download.php/12865/ST-Ericsson%20Inpu t%20Paper%20on%20NFC-A%20CR%20Activity.doc x [retrieved on 2013-10-09]
- Jafer Hussain: "Correction to NFC-B Collision Resolution Activity", , 14 August 2012 (2012-08-14), XP055083328, Retrieved from the Internet: URL:http://www.nfc-forum.org/apps/group_pu blic/download.php/12693/ST-Ericsson%20Inpu t%20Paper%20on%20NFC-B%20Collision%20Resol ution.docx [retrieved on 2013-10-10]
- "Identification cards - Contactless integrated circuit(s) cards - Proximity cards - Part 3: Initialization and anticollision", , 1 February 2001 (2001-02-01), XP055083126, Retrieved from the Internet: URL:http://www.robotmaker.ru/wp-content/up loads/2013/08/14443-3.pdf [retrieved on 2013-10-09]

## Description

### Technical field

The present invention concerns near field communications (NFC) between devices. Near field communications for the purposes of this specification means communication between devices using standards developed by the NFC Forum and exemplified by the publications ISO/IEC FDIS 14443 and Sony FeliCa. NFC communication ordinarily operates between devices at a range of 0.1 m or less and at a frequency of 13.56 MHz. In near field communication an initiator actively generates an activating radio frequency (RF) field which provokes a target device to transmit data for reception by the initiator.

### Background art

NFC target devices will commonly be referred to as tags in the rest of this specification although ISO 14443 refers to such devices as proximity cards (PICS). The NFC forum defines four types of tag, specifically NFC type 1, NFC type 2, type 3, and type 4A/B (type 4). For the purposes of this specification NFC type 2 and type 4 tags behave similarly therefore type 4 may be substituted for NFC type 2 hereinafter.

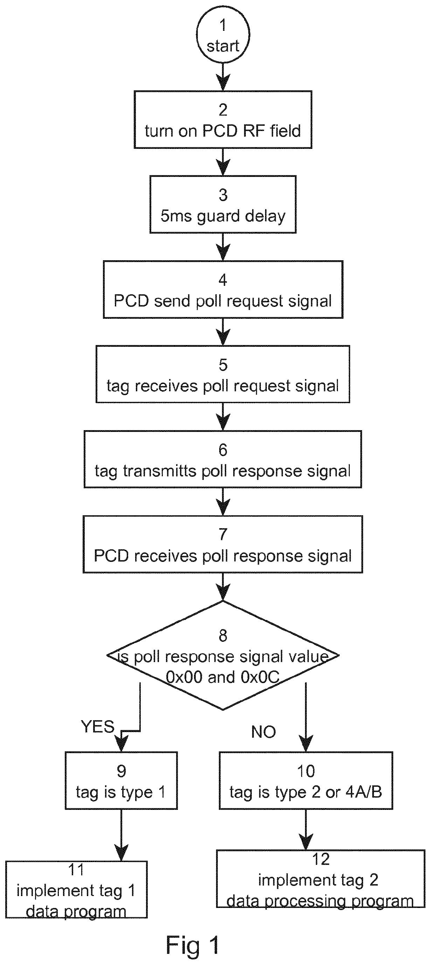

A tag is the device which stores and sends data on demand to a proximity coupling device (PCD). The PCD is the device which generates the activating RF field and will receive the data from the tag. A PCD may be a simple reader device but particularly in the present case can be any NFC enabled device such as a mobile phone (cell phone or smart phone), wireless telephone, personal digital assistant, personal computer, whether mobile or normally static (because the tag may be mobile), digital reader or tablet. In practice an NFC enabled

device such as a mobile phone may also act as a tag so that near field communication can be implemented between two or more mobile phones. Particularly where an NFC enabled device is a smart device, such as a smart phone, the device may have the ability to emulate any or each of the different types of tag. For the purpose of this specification the term tag should be understood to mean anything adapted to emulate a tag, including mobile phones and other smart devices which may be able emulate one or more tag types. For communication of the data stored by the tag, the type of tag must be established by the PCD and a corresponding data processing program run to read the data from the tag. The draft standard process for determining the tag type is outlined below and illustrated in prior art figure 1.

In step 1 the tag identification process starts, at step 2 the PCD will generate an RF field At step 3 the PCD implements a 5 millisecond time guard delay, then at step 4 the PCD will broadcast a poll request signal which is similar for all tag types. At step 5 the tag receives the poll request signal and is activated to transmit a poll response signal at step 6. The PCD receives the poll response signal at step 7 and compares the signal at step 8. The poll response signal in each case consists of 2 bytes. If the tag is NFC type 1 the value of the poll response signal will be 0x00 and 0x0C. If the tag is NFC type 2 the response will not be 0x00 and 0x0C. Consequently if the tag is NFC type 1 this can be discriminated at step 9 and this will then initiate an appropriate tag 1 data processing program at a second phase step 11. Conversely if the response poll is not 0x00 and 0x0C the tag is NFC type 2 and the PCD implements a tag NFC type 2 data processing program at step 12. This process works reliably if only one tag is present in the RF field.

It is not unusual to have more than one tag present within the RF field and in particular tags of both type 1 and type 2. This circumstance creates problems in selecting the tag from which to source data and the data processing program appropriate to the tag types present in the RF field.

The reader may be further enlightened as to the state of the art by reference to Jafer Hussain: "Correction to NFC-A Collision Resolution Activity", 4 September 2012.

### Statements of invention

Accordingly the present invention provides an NFC system r according to claim 1 and a method according to claim 3.

The method may advantageously include the step of, having determined the presence of a type 2 tag, implementing a program to read the, or each type 2 tag, and a step of setting the, or each, type 2 tag into a sleep mode unresponsive to a poll request signal and the step of repeating the method until no bit collisions occur. When no bit collisions occur, the step of reading and comparing the poll response value against the value for type 1 tags is implemented. If the values match the, or each remaining tag is a type 1 tag. The identification of only type 1 tags remaining awake may cause the method to implement a type 1 tag read program.

The aforesaid near field communication system enables the detection of multiple tags. However more reliable and rapid data acquisition can be achieved where the system can identify the presence or absence of type 1 tags. Accordingly in a fifth aspect of the present invention there is provided a near field communication system comprising a PCD, a type 1 tag and a type 2 tag;
each of said tag types being adapted to generate a poll response signal comprising a byte;
the type 1 tags generating a type 1 poll response signal wherein a sequence of bits are each set to a first value;
said type 2 tags generating a type 2 poll response signal wherein all except one of the sequence of bits is set to the first value and one of the bit sequence is set to a second value;
said PCD including a bit collision detector to detect any bit collision occurring between the respective bit sequences; and
the PCD is adapted to respond to the number of bit collisions to select an appropriate tag type read program.

Preferably the five bit sequence is the first five bits of the byte. The value for each bit may be either 0 or 1. Thus in a preferred example the five bit sequence for the type 1 tag poll response may be (00000xxx) the values available for the type 2 tags are then: 10000xxx, 01000xxx, 00100xxx, 00010xxx, or 00001 xxx.

If no bit collisions occur and the value of the bytes is 0x00 and 0x0C, then only type 1 tags are present in the RF field.

If bit collision occurs at only one position then each of a type 1 and a type 2 tag must be present in the RF field.

If no bit collision occurs, and the poll response value is not 0x00 and 0x0C then one or multiple type 2 tags are present.

If more than one bit collision occurs then at least two type 2 tags are present in the RF field.

Because the present system can detect tag types and numbers as described above it lends itself to deterministic management of data acquisition via the tag read process. Accordingly where one or more type 2 tags are detected the PCD may be adapted to implement a type 2 tag read program and to then put the, or each, type 2 tag into a sleep state unresponsive to the poll request signal.

The instance of more than one bit collision occurring indicates the possibility of one or more type one tags present in the RF field in addition to the two or more type two tags. To determine this condition the PCD may run the tag identification program subsequent to sleeping the read type 2 tag or tags. If no collision is detected and the value of the poll response is 0x00 and 0x0C, any remaining tag is a type 1 tag. The PCD may then be adapted to run a type 1 tag data processing program to read the, or each type 1 tag present in the RF field.

### Brief description of the drawings

A near field communication system comprising a PCD, a type 1 tag, and a type 2 tag will now be described, by way of example only, with reference to the accompanying illustrative figures, in which:
figure 2 is a flow chart of the process implemented by the system;
figure 3 is an illustration of an NFC enabled mobile phone implementing NFC with a type 1 tag and a type 2 tag;
figure 4 is an illustration of NF communication between two NFC enabled mobile phones;
figure 5 is an illustration of an NFC card tag reader implementing near field communication with a type 1 tag and a type 2 tag; and
figure 6 is an illustration of an NFC card tag reader implementing near field communication with an NFC enabled mobile phone.

### Detailed description of the drawings

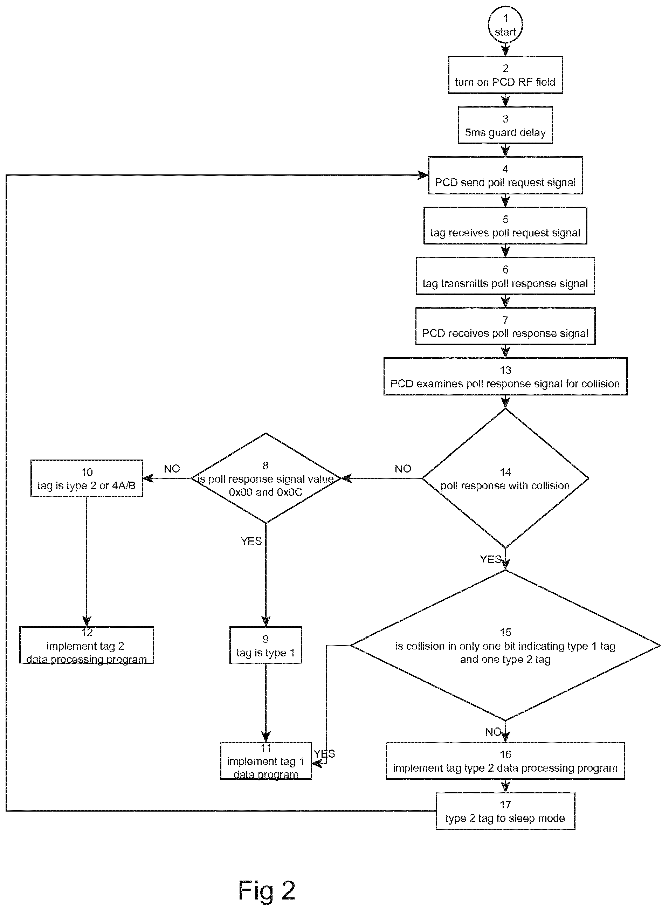

Figure 2 illustrates the steps of the method with steps common to the prior art of figure 1 identified with similar integers. Accordingly, for the sake of brevity the steps known from the prior art will not be repeated.

The tags in are adapted to respond to the poll request signal with a poll response signal which comprises a sequence of five bits. In the case of type 1 tags the sequence is the first five bits which are all set to one first value (e.g. 00000xxx). In type 2 tags the same first five bits have only one bit set to a second value (e.g. 10000xxx, 01000xxx, 00100xxx, 00010xxx, 00001 xxx).

As can clearly be seen from figure 2, the method implements steps 1 to 7 as the prior art of figure 1, however at step 7 the method goes to step 13 where the PCD examines the poll response signal for collisions between five bits, i.e. where two tags have replied with different bit strings such that at least one bit reads each of 1 and 0. Bit collisions will occur where each of type 1 and type 2 tags are present. Bit collisions may occur where multiple type 2 tags are present.

At step 14 where the method finds a bit collision in the poll response it goes to step 15 where the number of bit collisions is counted. If there are no bit collisions the method goes to step 8. The absence of bit collision confirms that only one tag type is present.

At step 15 the method determines if there is only one bit collision. Where there is only one bit collision the method confirms that there is one or more type 2 tag present and one or more type 1 tags. The method then goes to step 11 to read the or each type 1 tag. Where there are two or more collisions there must be two or more type 2 tags present, and type 1 tag may or may not be present. In this case the method goes to step 16 where the type 2 tag data processing program is run to recover data from the or each type 2 tag. Subsequently the method goes to step 17 where the type 2 tags are put into an unresponsive sleep mode so that the read type 2 tags do not respond to further poll requests. The method then goes to step 4 and repeats steps 4 to 14. If all the type 2 tags have been put into sleep mode no collisions will be identified at step 14 and the method goes to step 8.

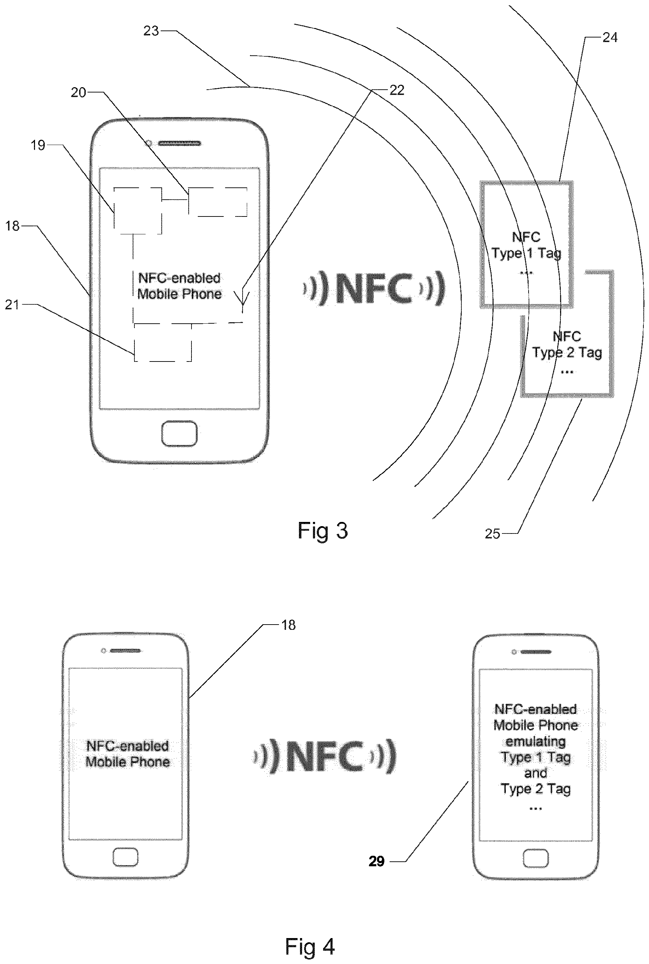

Figure 3 illustrates a first variant of the system and method in which a mobile phone such as a smart phone 18 includes a processor 19 executing machine readable code stored in a memory 20 to drive a near field communication module 21 to implement the previously described method so that the mobile phone behaves as a PCD. The machine readable code may be downloaded from the cell phone network, Wi-Fi or other media to install and execute in the mobile phone which may be otherwise conventionally adapted to implement near field communication. When running the code the mobile phone 18 generates a radio frequency field 23 via the antenna 22. Typically the field has a range of less than 0.1 m. In this example two tags 24 and 25 are within range of the RF field 23. Tag 24 is a type 1 tag while tag 25 is of type 2.

Figure 4 illustrates a variant where the mobile phone 18 is implementing the near field communication method with another mobile phone 26 which is adapted to emulate and communicate data as any of a type 1 tag, a type 2 tag or a type 4A/B tag. The method previously described is implemented by mobile phone 18 to correctly recover data from the mobile phone 29.

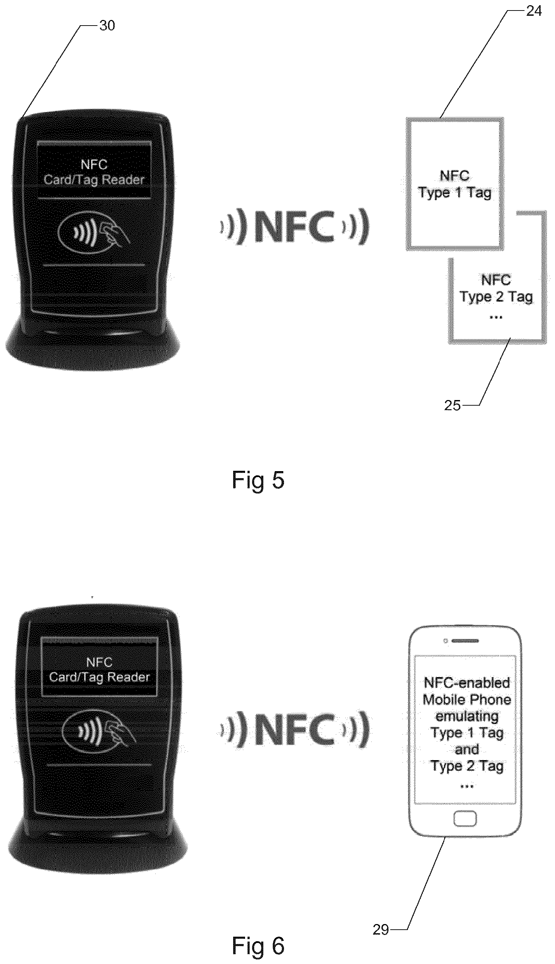

Figures 5 and 6 illustrate variants where the mobile phone 18 is replaced by an essentially immobile card/tag reader 30. Such devices are potentially useful in functions such as reading tickets or where NFC enabled payment cards are in use in retail.

## Claims

1. A Near Field Communication, NFC, system comprising a proximity coupling device (18, 30) and NFC type 1 and NFC type 2 tags, for use in near field communication, adapted to identify the presence and type of said NFC type 1 and NFC type 2 tags (24, 25, 29) present in a radio frequency field (23), wherein:
said proximity coupling device comprising:
a processor (19) adapted to run machine readable code to implement an NFC tag identification program whereby a near field communication module (21) of the proximity coupling device is adapted to;
generate the radio frequency field (23) to transmit a poll request signal; and to;
receive a poll response signal from each of any of said NFC type 1 and NFC type 2 tags (24, 25, 29) in range of the radio frequency field (23);
the poll response signals of the NFC type 1 and NFC type 2 tags comprising a common bit sequence,
wherein all bits of the common bit sequence are set to a first value for NFC type 1 tags, and all bits except one bit of the common bit sequence are set to the first value, and the one excepted bit is set to a second value, for type 2 NFC tags;
wherein the proximity coupling device is adapted to respond to a collision in only one bit of the common bit sequence of the received poll response signals to implement an NFC type 1 tag read program, and
to respond to a collision in more than one bit of the common bit sequence of the received poll response signals to implement an NFC type 2 tag read program.

2. An NFC system according to claim 1 the proximity coupling device having sleep means adapted to respond to reading the, or each NFC type 2 tag to set the, or each, NFC type 2 tag to a sleep condition unresponsive to the poll request signal; and
responsive to operation of the sleep means to re-run the NFC type 2 tag identification program.

3. A method of near field communication to identify the presence and type of Near Field Communication, NFC, type 1 and NFC type 2 tags (24, 25, 29) present in a radio frequency field (23) emitted by a proximity coupling device (18, 30):
generating the radio frequency field (23) from the proximity coupling device (18, 30);
transmitting a poll request signal from the proximity coupling device (18, 30);
receiving a poll response signal at the proximity coupling device (18, 30) from one or more of the NFC type 1 and NFC type 2 tags (24, 25, 29) within the radio frequency field;
the poll response signals of the NFC type 1 and NFC type 2 tags comprising a common sequence of bits where each bit of the common sequence of bits is set to a first value for NFC type 1 tags (24, 25, 29), and
all except one of the common sequence of bits is set to the first value, and the one excepted bit to a second value, for NFC type 2 tags (24, 25, 29); and
said proximity coupling device responding to a collision in only one bit of the common sequence of bits of the received poll response signals to implement an NFC type 1 tag read program; and
said proximity coupling device responding to a collision in more than one bit of the common sequence of bits of the received poll signals to implement an NFC type 2 tag read program.

4. A method according to claim 3 wherein:
when two or more bit collisions are detected, a type 2 NFC tag read program is implemented, and
the proximity coupling device transmits a signal to the, or each type 2 NFC tag to switch each NFC type 2 tag to a sleep condition unresponsive to the poll request signal and
the method is repeated from the step of transmitting a poll request signal.

## Patentansprüche

1. Nahfeldkommunikation (Near Field Communication) NFC System, das eine Näherungskopplungsvorrichtung (18, 30) und NFC Typ 1 und NFC Typ 2 Tags zur Anwendung in der Nahfeldkommunikation umfasst, die angepasst sind, um das Vorhandensein und den Typ der NFC Typ 1 und NFC Typ 2 Tags (24, 25, 29) zu identifizieren, die in einem Hochfrequenzfeld (23) vorhanden sind, wobei:
die Näherungskopplungsvorrichtung umfasst:
einen Prozessor (19), der angepasst ist, um einen maschinenlesbaren Code auszuführen, so dass ein NFC Tag-Identifizierungsprogramm implementiert wird, wobei dadurch ein Nahfeldkommunikationsmodul (21) der Näherungskopplungsvorrichtung angepasst ist, um:
das Hochfrequenzfeld (23) zu erzeugen, so dass ein Umfrage-Anforderungssignal gesendet wird, und um
ein Umfrage-Antwortsignal von jedem der NFC Typ 1 und NFC Typ 2 Tags (24, 25, 29) im Bereich des Hochfrequenzfeldes (23) zu empfangen;
wobei die Umfrage-Antwortsignale der NFC Typ 1 und NFC Typ 2 Tags eine gemeinsame Bitfolge umfassen,
wobei alle Bits der gemeinsamen Bitfolge auf einen ersten Wert für NFC Typ 1 Tags eingestellt werden und alle Bits außer einem Bit der gemeinsamen Bitfolge auf den ersten Wert eingestellt werden, wobei der eine ausgenommene Bit auf einen zweiten Wert für Typ 2 NFC Tags eingestellt wird;
wobei die Näherungskopplungsvorrichtung angepasst ist, um auf eine Kollision in nur einem Bit der gemeinsamen Bitfolge der empfangenen Umfrage-Antwortsignale zu reagieren, so dass ein NFC Typ 1 Tag Leseprogramm implementiert wird, und
um auf eine Kollision in mehr als einem Bit der gemeinsamen Bitfolge der empfangenen Umfrage-Antwortsignale zu reagieren, so dass ein NFC Typ 2 Tag Leseprogramm implementiert wird.

2. NFC System nach Anspruch 1, wobei die Näherungskopplungsvorrichtung eine Schlummereinrichtung hat, die angepasst ist, um auf das Lesen des oder jedes NFC Typ 2 Tags zu reagieren, um den oder jeden NFC Typ 2 Tag in einen Schlummerzustand einzustellen, der für das Umfrage-Anforderungssignal unempfänglich ist; und
für den Betrieb der Schlummereinrichtung empfänglich ist, um das NFC Typ 2 Tag Identifizierungsprogramm wieder auszuführen.

3. Verfahren der Nahfeldkommunikation, um das Vorhandensein und den Typ der Nahfeldkommunikation NFC Typ 1 und NFC Typ 2 Tags (24, 25, 29) zu identifizieren, die in einem Hochfrequenzfeld (23) vorhanden sind, das von einer Näherungskopplungsvorrichtung (18, 30) emittiert wird:
Erzeugen des Hochfrequenzfelds (23) von der Näherungskopplungsvorrichtung (18, 30);
Senden eines Umfrage-Anforderungssignals von der Näherungskopplungsvorrichtung (18, 30);
Empfangen eines Umfrage-Antwortsignals an der Näherungskopplungsvorrichtung (18, 30) von einem oder mehr der NFC Typ 1 und NFC Typ 2 Tags (24, 25, 29) in dem Hochfrequenzfeld;
wobei die Umfrage-Antwortsignale der NFC Typ 1 und NFC Typ 2 Tags eine gemeinsame Folge von Bits umfassen, wobei
jeder Bit der gemeinsamen Folge von Bits auf einen ersten Wert für NFC Typ 1 Tags (24, 25, 29) eingestellt wird, und
alle außer einem der gemeinsamen Folge von Bits auf den ersten Wert eingestellt werden, wobei der eine ausgenommene Bit auf einen zweiten Wert für NFC Typ 2 Tags (24, 25, 29) eingestellt wird; und
die Näherungskopplungsvorrichtung auf eine Kollision in nur einem Bit der gemeinsamen Folge von Bits der empfangenen Umfrage-Antwortsignale reagiert, so dass ein NFC Typ 1 Tag Leseprogramm implementiert wird, und
die Näherungskopplungsvorrichtung auf eine Kollision in mehr als einem Bit der gemeinsamen Folge von Bits der empfangenen Umfragesignale reagiert, so dass ein NFC Typ 2 Tag Leseprogramm implementiert wird.

4. Verfahren nach Anspruch 3, wobei:
wenn zwei oder mehr Bitkollisionen erfasst werden, ein Typ 2 NFC Tag Leseprogramm implementiert wird, und
die Näherungskopplungsvorrichtung ein Signal zu dem oder jedem Typ 2 NFC Tag sendet, um jeden NFC Typ 2 Tag auf einen Schlummerzustand umzuschalten, der für das Umfrage-Anforderungssignal unempfänglich ist, und
das Verfahren von dem Schritt zum Senden eines Umfrage-Anforderungssignals wiederholt wird.

## Revendications

1. Système de communication en champ proche, NFC, comprenant un dispositif de couplage par proximité (18, 30), des marqueurs NFC de type 1 et des marqueurs NFC de type 2, destinés à une utilisation dans une communication en champ proche, conçu pour :
identifier la présence et le type desdits marqueurs NFC de type 1 et de type 2 (24, 25, 29) présents dans un champ radiofréquence (23), dans lequel :
ledit dispositif de couplage par proximité comprend :
un processeur (19) conçu pour exécuter un code pouvant être lu par machine afin de mettre en oeuvre un programme d'identification de marqueurs NFC grâce auquel un module de communication en champ proche (21) du dispositif de couplage par proximité est conçu pour :
générer le champ radiofréquence (23) pour transmettre un signal de demande d'appel, et
recevoir un signal de réponse d'appel provenant de chacun desdits marqueurs NFC quelconques de type 1 et de type 2 (24, 25, 29) dans la plage du champ radiofréquence (23), les signaux de réponse d'appel des marqueurs NFC de type 1 et de type 2 comprenant une séquence binaire commune,
dans lequel tous les bits de la séquence commune binaire sont positionnés à une première valeur pour des marqueurs NFC de type 1, et tous les bits sauf un de la séquence binaire commune sont positionnés à la première valeur, le bit d'exception étant positionné à une seconde valeur, pour des marqueurs NFC de type 2,
dans lequel le dispositif de couplage par proximité est conçu pour répondre à une collision dans un seul bit de la séquence binaire commune des signaux de réponse d'appel reçus pour mettre en oeuvre un programme de lecture de marqueurs NFC de type 1, et
pour répondre à une collision dans plus d'un seul bit de la séquence binaire commune des signaux de réponse d'appel reçus pour mettre en oeuvre un programme de lecture de marqueurs NFC de type 2.

2. Système de communication NFC selon la revendication 1, le dispositif de couplage par proximité comportant un moyen de mise en sommeil conçu pour répondre à la lecture du, ou de chaque, marqueur NFC de type 2 pour positionner le, ou chaque, marqueur NFC de type 2 dans un état de sommeil le rendant sans réponse au signal de demande d'appel, et
sensible au fonctionnement du moyen de mise en sommeil pour exécuter de nouveau le programme d'identification de marqueurs NFC de type 2.

3. Procédé de communications en champ proche permettant d'identifier la présence et le type de marqueurs NFC de type 1 et de type 2 (24, 25, 29) qui sont présents dans un champ radiofréquence (23) émis par un dispositif de couplage par proximité (18, 30), le procédé comportant :
la génération du champ radiofréquence (23) à partir du dispositif de couplage par proximité (18, 30),
la transmission d'un signal d'appel à partir du dispositif de couplage par proximité (18, 30),
la réception d'un signal de réponse d'appel au niveau du dispositif de couplage par proximité (18, 30) provenant d'un seul ou de plusieurs des marqueurs NFC de type 1 et de type 2 (24, 25, 29) à l'intérieur du champ radiofréquence,
les signaux de réponse d'appel des marqueurs NFC de type 1 et de type 2 comprenant une séquence commune de bits où chaque bit de la séquence commune de bits est positionné à une première valeur pour des marqueurs NFC de type 1 (24, 25, 29), et
où tous sauf un de la séquence commune de bits sont positionnés à une première valeur, et le bit d'exception à une seconde valeur, pour des marqueurs NFC de type 2 (24, 25, 29), et
ledit dispositif de couplage par proximité répond à une collision dans un seul bit de la séquence commune de bits des signaux de réponse d'appel reçus pour mettre en oeuvre un programme de lecture de marqueurs NFC de type 1, et
ledit dispositif de couplage par proximité répond à une collision se produisant dans plus d'un seul bit de la séquence commune de bits des signaux d'appel reçus pour mettre en oeuvre le programme de lecture de marqueurs NFC de type 2.

4. Procédé selon la revendication 3, dans lequel :
lorsque deux collisions ou plus de bits sont détectées, un programme de lecture de marqueurs NFC de type 2 est mis en oeuvre, et
le dispositif de couplage par proximité transmet un signal au marqueur NFC de type 2 ou à chacun d'eux, pour basculer chaque marqueur NFC de type 2 vers un état de sommeil ne répondant pas au signal de demande d'appel, et
le procédé est répété depuis l'étape de transmission d'un signal de demande d'appel.
